Europäisches Patentamt

European Patent Office

Office européen des brevets

(11) Veröffentlichungsnummer : **0 109 530**
**B1**

(12) # EUROPÄISCHE PATENTSCHRIFT

(45) Veröffentlichungstag der Patentschrift :
07.05.86

(21) Anmeldenummer : 83110157.1

(22) Anmeldetag : 12.10.83

(51) Int. Cl.⁴ : **C 08 F 10/00, C 08 F 2/34**

(54) Verfahren zur Herstellung von Homo- und Copolymerisaten aus 1-Olefinen.

(30) Priorität : 23.10.82 DE 3239272

(43) Veröffentlichungstag der Anmeldung :
30.05.84 Patentblatt 84/22

(45) Bekanntmachung des Hinweises auf die Patenterteilung : 07.05.86 Patentblatt 86/19

(84) Benannte Vertragsstaaten :
DE FR GB IT NL

(56) Entgegenhaltungen :
DE-B- 1 292 381
FR-A- 1 135 292
US-A- 3 244 768

(73) Patentinhaber : EC ERDÖLCHEMIE GMBH
Postfach 75 20 02
D-5000 Köln 71 (DE)

(72) Erfinder : Endres, Werner, Dipl.-Ing.
Claudiusstrasse 34
D-4047 Dormagen 1 (DE)
Erfinder : Sutter, Hubert, Dr.
Domblick 28
D-5090 Leverkusen 3 (DE)
Erfinder : Kolwert, Alois, Dr.
Im Winkel 26
D-5064 Rösrath (DE)

(74) Vertreter : Mann, Volker, Dr. et al
c/o Bayer Aktiengesellschaft Zentralbereich Patente
Marken und Lizenzen
D-5090 Leverkusen-Bayerwerk (DE)

**Beschreibung**

Die Erfindung betrifft ein Verfahren zur Herstellung von Homo- und Copolymerisaten aus 1-Olefinen in Abwesenheit von Lösungs- oder Suspendiermitteln in der Gasphase unter Verwendung metallorganischer Mischkatalysatoren. Die Erfindung betrifft insbesondere die Herstellung von Homopolymerisaten des Ethylens und von dessen Copolymerisaten mit 1-Olefinen, wobei Produkte mit Dichten von 0,900-0,970 kg/l und Schmelzindices von 0,1-100 g/10 Min. (190 °C ; 2,16 Kp) erhalten werden.

Zur Herstellung von Homo- und Copolymerisaten aus 1-Olefinen, besonders der Polymerisate des Ethylens, werden in der Großtechnik im allgemeinen vier sehr unterschiedliche Verfahrenstechniken benutzt : das Lösungsverfahren, das Suspensionsverfahren, das Gasphasenverfahren mit einem bewegten Feststoffbett aus bereits gebildeten Polymerteilchen und das Hochdruck-Verfahren in Substanz.

So ist aus DE-AS-12 92 381 ein Hochdruck-Polymerisationsverfahren für Ethylen und andere polymerisierbare α-Olefine in Substanz bekannt, bei dem in Gegenwart eines Katalysators, der typischerweise aus Triisobutylaluminium und Titantetrachlorid besteht, bei einem Druck von mindestens 500 bar und Temperaturen von etwa 200 bis 250 °C in einem Rohrreaktor gearbeitet wird. Das überschüssige, nicht umgesetzte Ethylen hat gute Löseeigenschaften für das Polymerisat, so daß das Reaktionsgemisch einphasig ist (Ullmanns Encyklopädie der technischen Chemie, 4. Aufl., Band 19 (1980), S. 172) und in flüssiger Form dem Reaktor entnommen wird.

Die wirtschaftliche Leistungsfähigkeit (Raum-Zeit-Ausbeute) dieser Verfahren hängt entscheidend davon ab, wie gut es gelingt, die sehr hohe Polymerisationswärme des 1-Olefins (bei Ethylen ca. 900 kcal/kg bzw. 3 770 kJ/kg) abzuführen. Normalerweise kann diese Wärmeabfuhr nur zu einem geringen Teil unmittelbar im Reaktionsraum erfolgen, so daß ein weitgehend adiabatischer Reaktionsverlauf in Kauf genommen werden muß, das heißt, die abgeführte Wärmemenge hängt von der umgewälzten Stoffmenge und deren Temperaturdifferenz zwischen Eintritt und Austritt in bzw. aus dem Reaktionsgefäß ab. Da nun Polymerisationswärme und gebildete Polymermenge einander proportional sind, muß auch der Umsatz proportional der Temperaturdifferenz des Stoffgemisches zwischen Eintritt und Austritt in bzw. aus dem Reaktionsgefäß sein.

Wenn nun, wie beispielsweise und besonders augenscheinlich, bei dem technisch fortschrittlichen Gasphasenverfahren mit einem Feststoffbett aus Polymerteilchen systembedingt nur relativ niedrige Reaktionstemperaturen zulässig sind, bedeutet dies die Umwälzung hoher Stoffmengen bei niedrigem Umsatz bzw. geringer Raum-Zeit-Ausbeute. So beschreibt beispielsweise DE-OS-2 609 889 ein Verfahren zur Herstellung von Ethylenmischpolymerisaten mit einer Dichte von etwa 0,900-0,940 in einem Fließbett, bei dem in Gegenwart eines Trägerkatalysators, der spezifische Mengen an Chrom, Titan und gegebenenfalls Fluor enthält, polymerisiert wird. Dieses Verfahren der DE-OS wird bei einer Austrittstemperatur von etwa 30-105 °C durchgeführt.

Aus Gründen der sicheren technischen Durchführung muß man jedoch einen ausreichenden Temperaturabstand vom Erweichungspunkt des hergestellten Polymeren einhalten, so daß in der Praxis eine Austrittstemperatur von etwa 80 °C im allgemeinen nicht überschritten wird. Es ist eine hohe Gasumlaufmenge von etwa dem 50-fachen der Frischgasbeschickung erforderlich. Da die Frischgasbeschickung etwa der erzeugten Polymerisatmenge entspricht, errechnet sich pro Umlauf ein Umsatz von nur 2 %.

Der Verbesserung der Wärmeabfuhr aus dem Polymerisationsreaktor und damit der Erhöhung des Umsatzes und der Raum-Zeit-Ausbeute sind enge Grenzen gesetzt. Der Einbau von Kühlern in den Reaktionsraum ist problematisch, da unvermeidliche Beläge auf den Kühlflächen Qualitätsprobleme mit sich bringen und auch den Wärmeübergang verschlechtern ; beides führt zu häufigeren Anlagestillständen. Es ist weiterhin versucht worden, die Temperaturdifferenz des umlaufenden Stoffgemisches zwischen Reaktorein- und -austritt dadurch zu vergrößern, daß man dessen Eintrittstemperatur stark absenkt. Hierzu ist jedoch die Verwendung von Kälteanlagen und ein dadurch sich ergebender ungünstiger Energieverbrauch erforderlich.

Es wurde nun ein Verfahren zur Herstellung von Homo- und Copolymerisaten aus 1-Olefinen in Abwesenheit von Lösungs- oder Suspendiermitteln in der Gasphase unter Verwendung von metallorganischen Mischkatalysatoren auf Basis von Übergangsmetallen der Gruppen IVa, Va und/oder VIa des Periodensystems (Mendelejew) gefunden, das dadurch gekennzeichnet ist, daß die Reaktionstemperatur oberhalb der Erweichungstemperatur des Polymeren liegt und das Polymere als Schmelze anfällt, wobei bei einem Druck bis 400 bar gearbeitet wird.

Die Arbeitsweise des erfindungsgemäßen Verfahrens stellt sich im allgemeinen wie folgt dar :

Als Reaktor wird im allgemeinen ein zylindrischer Behälter mit einem Konus als Abschluß nach unten und einer Erweiterung als Abschluß nach oben (als Zone kleinerer Strömungsgeschwindigkeit) benutzt, der vom Monomerengemisch normalerweise von unten nach oben durchströmt wird. Im oberen Teil des Reaktors, bevor sich dieser in der beschriebenen Weise erweitert, wird der Katalysator fein verteilt zudosiert. Der Polymerisationsvorgang beginnt nun an jedem der eindosierten Katalysatorteilchen. Im Verlaufe dieses Polymerisationsvorganges wachsen die Katalysator/Polymerisat-Teilchen, werden dadurch schwerer und sinken im Gegenstrom zum Monomergemisch nach unten, da die im Verlaufe der Polymerisation wachsenden Teilchen schließlich eine höhere Sinkgeschwindigkeit bekommen als ihr Auftrieb in dem entgegenströmenden Monomergemisch. Dabei heizt sich jedes Partikelchen durch die Polymerisationswärme auf. Die wachsenden Katalysator/Polymerisat-Teilchen sind im erfindungsgemäßen Temperaturbereich von 130-350 °C schmelzflüssig und geben die Polymerisationswärme kontinuierlich an das entgegenströmende Monomergemisch ab. Dieses heizt sich, von unten nach oben strömend, dadurch allmählich auf. Zur Beeinflussung der Reaktionstemperatur ist auch eine zusätzliche Verdampfungskühlung durch Direkteinspritzung von Kühlmitteln, beispielsweise gesättigten Kohlenwasserstoffen im Siedebereich von etwa 40-80 °C, möglich, wobei sich dann noch zusätzliche Vorteile in den Kühlern außerhalb des Reaktionsraumes durch die Kondensation dieses Kühlmittels ergeben (verbesserter Wärmeübergang, Verhinderung von Ablagerungen in den Kühlern).

Die schmelzflüssigen Polymertropfen sammeln sich im Konus und bilden gleichzeitig den Gasabschluß nach unten. Der Eintritt des Monomergemisches erfolgt oberhalb der sich sammelnden Polymerschmelze, beispielsweise im unteren Teil des zylindrischen Teils des Reaktors oder im oberen Teil des sich anschließenden Konus, oberhalb der Schmelze.

Der Austritt der Schmelze aus dem Reaktor kann beispielsweise über einen Extruder erfolgen, wobei die Möglichkeit der homogenen Einmischung von Additiven oder von anderen Polymeren oder auch die Möglichkeit zur Restentgasung besteht. Eine weitere Arbeitsweise wird in US 4 058 654 beschrieben, bei der in einem speziellen Schneckenreaktor die noch monomerhaltige bzw. mit weiteren Monomeren versetzte Schmelze bis zu praktisch vollständigem Umsatz zu Ende polymerisiert und dann granuliert wird. Dabei erübrigt sich eine aufwendige Monomerrückgewinnung.

Der Austrag der Schmelze kann aber auch durch Zahnradpumpen erfolgen, beispielsweise, wenn die Additive direkt in den Konus gegeben werden und wenn anschließend nur noch granuliert werden muß. Bei höheren Betriebsdrucken kann selbst eine solche Zahnradpumpe entfallen, wenn dieser höhere Betriebsdruck als Vordruck für die Granulation ausreicht.

Sonstige Verfahrensschritte, die vor und nach der Reaktion des erfindungsgemäßen Verfahrens vorgenommen werden, sind im Prinzip denen aller bekannten Verfahren gleich und können aus dem beiliegenden Schema beispielhaft ersehen werden. Beispiele für solche sonstigen Verfahrensschritte sind : Reingung des oder der Monomeren, Mischung des oder der Monomeren mit gegebenenfalls zugesetzten Molekulargewichtsreglern, wie Wasserstoff, Einstellung der Gaseintrittstemperatur des Einsatzgemisches, Kompression des einzusetzenden Gemisches auf den vorgesehenen Reaktionsdruck.

(Siehe Schema Seite 4 f.)

Blockschema des erfindungsgemäßen Verfahrens

| KATALYSATOR | Mol-Gew.-REGLER MONOMERE |
|---|---|
| Herstellung | Feinstreinigung |
| Aufbereitung | Mischung |
| Dosierung | Dosierung |
| | Kompression |

REAKTION

| KREISGAS |
|---|
| Umwälzung |
| Kühlung |
| Ausschleusung |
| Reinigung |
| Kompression |

ADDITIVE
jeder Art

| POLYMER-SCHMELZE |
|---|
| Homogenisierung |
| Additiv-Zugabe |
| Entgasung |
| Granulierung |

| GRANULAT | GRANULAT |
|---|---|
| Lager | Lager |
| Absackung | Nachextrusion |
| Loseverladung | Compoundierung |

**0 109 530**

Die vorliegende Erfindung stellt ein vielseitiges Polymerisationsverfahren dar. Seine Eigenschaften, insbesondere in Bezug auf die Wirtschaftlichkeit, seien nochmals beispielhaft anhand folgender Punkte dargestellt :

1. Die Polymerisate fallen in schmelzflüssiger Form an und können dadurch unmittelbar der Weiterverarbeitung, wie oben beispielhaft angeführt, (Additivzugabe, Granulierung) zugeführt werden. Im Gegensatz hierzu fallen die Polymerisate nach dem Gasphasen-Verfahren unter Verwendung eines Festkatalysators als Pulver an, das für den Transport und die Verarbeitung ein ungünstig niedriges Schüttgewicht zeigt, dessen Additivdotierung problematisch ist und das meist durch zusätzlichen Energieaufwand in die handelsübliche Granulatform übergeführt werden muß.

2. Die höhere Reaktionstemperatur des erfindungsgemäßen Verfahrens führt zu höheren Umsätzen pro Monomerkreislauf und zu höheren Raum-Zeit-Ausbeuten. Wegen der verbesserten Abfuhr der Polymerisationswärme steigt diese Raum-Zeit-Ausbeute gegenüber den bislang wirtschaftlichsten Verfahren auf das Dreibis Zehnfache an. Hierzu sind keine Einbauten zur Wärmeabfuhr im Reaktionsraum erforderlich.

3. Die Aufrechterhaltung eines definierten Wirbelbetts mit engbegrenztem Gasdurchfluß ist nicht erforderlich.

4. Die wesentlich höhere Gasaustrittstemperatur aus dem Reaktionsraum ermöglicht eine wirtschaftliche Abwärmeverwertung.

5. In einer dem Fachmann bekannten Abhängigkeit von verschiedenen eingesetzten Katalysatoren sowie in Abhängigkeit von verschiedenen polymerisierbaren Olefinen und deren Gemischen können auch im erfindungsgemäßen Verfahren Polymerisate im gesamten Dichtebereich von 0,90-0,97 kg/l hergestellt werden.

Das erfindungsgemäße Verfahren wird bei Reaktionstemperaturen durchgeführt, die oberhalb des Erweichungspunktes des hergestellten Polymerisats liegen. Die Obergrenze ist beispielsweise durch die Zersetzungstemperatur der Monomeren, die Temperaturempfindlichkeit des Polymeren sowie die Temperaturempfindlichkeit und Inaktivität des Katalysators gegeben. Beispielsweise sei ein Temperaturbereich für die Reaktionstemperatur, die im allgemeinen mit der Gasaustrittstemperatur übereinstimmt, von 130-350 °C, bevorzugt von 180-350 °C, besonders bevorzugt von 200-350 °C, ganz besonders bevorzugt von 220-320 °C erwähnt.

Das erfindungsgemäße Verfahren kann in einem weiten Druckbereich durchgeführt werden, beispielsweise bei einem Druck von 1-400 bar, bevorzugt von 3-200 bar, besonders bevorzugt von 4-100 bar, ganz besonders bevorzugt von 4-60 bar.

Als Monomere und Comonomere werden für das erfindungsgemäße Verfahren 1-Olefine eingesetzt. Hierunter sind für das erfindungsgemäße Verfahren aliphatische 1-Olefine und gegebenenfalls substituiertes Styrol zu verstehen. Als aliphatische 1-Olefine seien beispielsweise solche mit 2 bis 8 C-Atomen genannt, wie Ethylen, Propylen, Buten-1, Hexen-1, 4-Methylpenten-1, Octen-1. In bevorzugter Weise werden Ethylen- oder Propylen-Polymerisate sowie Ethylen- oder Propylen-Copolymerisate hergestellt. Insbesondere wird Polyethylen oder ein Ethylen-Copolymerisat hergestellt, wobei als bevorzugte Comonomere Propylen, Buten-1, 4-Methyl-penten-1, Hexen-1 oder Octen-1 einzeln oder im Gemisch eingesetzt werden.

Im erfindungsgemäßen Verfahren werden Katalysatoren in Form von feinverteilten Partikelchen eingesetzt. Als Katalysatoren für das erfindungsgemäße Verfahren eignen sich metallorganische Komplexkatalysatoren auf der Basis von Übergangsmetallen der Gruppen IVa, Va und VIa des Periodensystems (Mendelejew), allgemein bekannt als sogenannte Ziegler- oder Phillipskatalysatoren. Bevorzugt werden Katalysatorsysteme des Ziegler-Typs eingesetzt. Diese Katalysatoren können in ihrer wirksamen Form fest oder flüssig sein und dementsprechend als Festkörper oder als Flüssigkeit in den Reaktionsraum dosiert werden ; sie werden aber normalerweise in verdünnter Form, daß heißt in Suspension oder als Lösung eingesetzt. Eine weitere Variante kann darin bestehen, die flüssigen Komponenten des Katalysatorsystems erst unmittelbar vor oder bei dem Eintritt in den Reaktionsraum zusammenzubringen, so daß in situ das wirksame (gegebenenfalls feste) Katalysatorsystem entsteht. Für den Fall fester Katalysatorteilchen kommt beispielsweise eine Teilchengrößenverteilung von 0,1-10 μ in Frage.

Geeignete Übergangsmetalle sind beispielsweise Titan, Vanadin, Zirkon und Chrom, wobei Titan und Vanadin bevorzugt sind. Diese Übergangsmetalle können als Halogenide, Alkoxyde, Alkoxyhalogenide, Oxyhalogenide, Acetylacetonate, Sandwichverbindungen mit Cyclopentadien und als andere Derivate eingesetzt werden. Als Beispiel seien genannt : Titantetra- und -trichlorid, Tetrabutoxytitan, Tri-i-propoxytitanchlorid, Vandinoxychlorid und Dicyclopentadienyltitandichlorid.

Als Cokatalysatoren werden wie üblich die Organyle von Metallen der ersten bis dritten Gruppe des Periodensystems (Mendelejew) eingesetzt, vorzugsweise die Organyle des Aluminiums. Als Beispiel seien genannt : Triethylaluminium, Tri-i-butylaluminium, Tri-n-octylaluminium, Methylalumoxan, Dimethylaluminiumchlorid und Ethylaluminiumdichlorid.

Das Katalysatorsystem kann mit oder ohne einen geeigneten Träger eingesetzt werden. Um die für das erfindungsgemäße Verfahren erforderliche hohe Katalysatoraktivität zu erzielen, wird das Katalysatorsystem jedoch bevorzugt mit einem geeigneten Träger kombiniert, wie beispielsweise wasserfreien Magnesiumhalogeniden, insbesondere Magnesiumchlorid. Die Kombination aus Übergangsmetall und

5

Magnesiumhalogenid kann auf physikalischem Weg erfolgen, beispielsweise durch gemeinsames Vermahlen der Übergangsmetallkomponenten mit dem Magnesiumhalogenid oder auf chemischem Weg. Im letzteren Fall geht man üblicherweise von magnesiumorganischen Verbindungen aus, wie Magnesiumalkylen, Magnesiumalkoholaten oder Grignard-Verbindungen, die mit der halogenhaltigen Übergangsmetallverbindung umgesetzt werden oder man setzt die magnesiumorganische Verbindung mit halogenfreien Übergangsmetallkomponenten in Gegenwart einer halogenhaltigen Verbindung, wie z. B. Halogenwasserstoff und Alkylhalogenid um.

Eine weitere Aktivierung bzw. Sensibilisierung des Katalysatorsystems, insbesondere, wenn es um die Steigerung der Stereoselektivität geht, kann durch Zusatz von Elektronendonatoren, wie z. B. Estern und Ethern erreicht werden. Auch eine Vorpolymerisation mit Ethylen und/oder einem der Comonomeren und nachfolgendem Einsatz als Präpolymerisat/Katalysator-Komposition kann Aktivität und/oder die Handhabung des Katalysators verbessern.

Für den erfindungsgemäßen Einsatz sind Katalysatorsysteme erforderlich, deren hohe Aktivität auch noch bei den verfahrensbedingt hohen Temperaturen ausreichend ist, um auf eine Katalysatorentfernung aus dem Polymer verzichten zu können. Erfahrensgemäß erfüllen diese Forderungen besonders solche Systeme, die neben Titan noch Vanadin als Übergangsmetall enthalten.

## Beispiele

## Beispiel 1

a) Herstellung des Katalysators

1,2 mmol n-Butylmagnesiumchlorid (in bekannter Weise aus n-Butylchlorid und Magnesiumpulver hergestellt) wurden in 700 ml trockenem n-Heptan unter Stickstoff suspendiert und auf 70 °C erwärmt. Hierzu wurde im Verlauf von 1 bis 2 Stunden unter Rühren eine Lösung von 250 mmol Titantetrachlorid und 150 mmol Vanadinoxychlorid in 400 ml trockenem n-Heptan gleichmäßig zugesetzt. Nach der Zugabe wurde etwa 1 Stunde bei 80 °C nachgerührt. Der entstandene braun-schwarze Niederschlag wurde abgetrennt, 4 mal mit trockenem n-Heptan gewaschen und unter Stickstoff getrocknet und aufbewahrt.

b) Polymerisation

Ein Viertel des unter a) erhaltenen Pulvers wurde in 200 ml trockenem Isododecan suspendiert und durch Zugabe von 200 mmol Tri-n-octylaluminium aktiviert. Diese Suspension wurde intermittierend in das obere Viertel eines Labor-Polymerisationsreaktors mit Hilfe von Wasserstoff als Treibgas eingesprüht. Der Labor-Polymerisationsreaktor bestand aus einem aufrecht stehenden beheizbaren Glasrohr von 100 cm Länge und einem Durchmesser von 7 cm. Am unteren Ende wurde Ethylen mit einer Menge von 1 l/s bei Reaktionsdruck eingeleitet. Für den Reaktionsstart wurde der Reaktor zunächst so stark beheizt, daß die Gastemperatur in der oberen Reaktorhälfte etwa 150 °C betrug. Nach dem Anspringen der Reaktion wurde die Beheizung des Reaktors soweit zurückgenommen, daß sich im Gasraum der oberen Reaktorhälfte eine Temperatur von etwa 230 °C einstellte. Die Reaktion wurde bei einem Druck von 5 bar durchgeführt. Das Polymer schlug sich als Schmelze überwiegend auf der Reaktorwandung nieder und floß zum unteren Ende des Reaktors, wo es mit Hilfe einer Förderschnecke abgezogen wurde. Überschüssiges Ethylen sowie Lösungsmittelanteile aus der Katalysatorsuspension wurden am oberen Ende des Reaktors abgezogen. Das erstarrte Polymer hatte eine Dichte von 0,960 kg/l und einem Schmelzindex MI von 1 g/10 Min. (190 °C ; 2,16 Kp).

## Beispiel 2

Das zweite Viertel des in Beispiel 1a) hergestellten Pulvers wurde in 500 ml trockenem n-Heptan aufgeschlämmt und mit 200 mmol Tri-i-butylaluminium aktiviert. In diese Suspension wurde bei einer Temperatur von 60 °C Ethylen bis zu einem Verbrauch von 700 g eingeleitet. Das entstandene Präpolymerisat wurde abfiltriert, viermal mit trockenem n-Heptan gewaschen und unter Stickstoff getrocknet.

Das äußerst feinteilige Präpolymerpulver wurde über eine mit Wasserstoff überlagerte Dosiereinrichtung in das obere Viertel des im Beispiel 1 beschriebenen Labor-Polymerisationsreaktors eingebracht. Die Polymerisation wurde dann wie im Beispiel 1 durchgeführt.

## Beispiel 3

a) Herstellung des Katalysators

28 ml wasserfreies Magnesiumchlorid wurde mit 0,19 ml $TiCl_3$ in einer Laborschwingmühle in Gegenwart von 50 ml trockenem i-Octan unter Stickstoff vermahlen. Der entstandene Trägerkatalysator (Teilchengröße unter 1 μm) wurde abgetrennt, unter Stickstoff getrocknet und aufbewahrt.

b) Polymerisation

Ein Zehntel des unter a) erhaltenen Katalysators, suspendiert in 5 ml trockenem i-Octan wurde mit 1 mMol Aluminiumtriethyl aktiviert und intermetierend in das obere Viertel eines Labor-Polymerisationsreaktors mit Hilfe von Wasserstoff als Treibgas eingesprüht. Abweichend von Beispielen 1 und 2 besteht der Labor-Polymerisationsreaktor aus einem aufrecht stehenden beheizbaren Stahlrohr, jedoch mit den gleichen Abmessungen wie in den Beispielen 1 und 2. Am unteren Ende wurde Ethylen mit einer Menge von 1 l/s (bei Reaktionsdruck) eingeleitet. Die Polymerisation wurde dann wie in Beispiel 1 durchgeführt, jedoch unter einem Druck von 75 bar und bei einer Temperatur von 210 °C. Das erhaltene Polymer hatte eine Dichte von 0,960 kg/l und einen Schmelzindex MI von 0,5 g/10 Min. (190 °C ; 2,16 Kp).

**Patentansprüche**

1. Verfahren zur Herstellung von Homo- und Copolymerisaten aus 1-Olefinen in Abwesenheit von Lösungsoder Suspendiermitteln in der Gasphase unter Verwendung von metallorganischen Mischkatalysatoren auf Basis von Übergangsmetallen der Gruppen IVa, Va und/oder VIa des Periodensystems (Mendelejew), dadurch gekennzeichnet, daß die Reaktionstemperatur oberhalb der Erweichungstemperatur des Polymeren liegt und das Polymere als Schmelze anfällt, wobei bei einem Druck bis 400 bar gearbeitet wird.

2. Verfahren nach Anspruch 1, dadurch gekennzeichnet, daß die Reaktionstemperatur bei 130-350 °C liegt.

3. Verfahren nach Anspruch 1, dadurch gekennzeichnet, daß die Reaktionstemperatur bei 180-350 °C liegt.

4. Verfahren nach Anspruch 1, dadurch gekennzeichnet, daß die Reaktionstemperatur bei 200-350 °C liegt.

5. Verfahren nach Anspruch 1, dadurch gekennzeichnet, daß die Reaktionstemperatur bei 220-320 °C liegt.

6. Verfahren nach Anspruch 1 bis 5, dadurch gekennzeichnet, daß Ethylen, gegebenenfalls in Gegenwart von Comonomeren polymerisiert wird.

7. Verfahren nach Anspruch 6, dadurch gekennzeichnet, daß als Comonomere Propylen, Buten-1, 4-Methyl-penten-1, Hexen-1 oder Octen-1 einzeln oder im Gemisch eingesetzt werden.

8. Verfahren nach Anspruch 1 bis 7, dadurch gekennzeichnet, daß bei einem Druck von 3-200 bar gearbeitet wird.

9. Verfahren nach Anspruch 1 bis 7, dadurch gekennzeichnet, daß bei einem Druck von 4-100 bar gearbeitet wird.

10. Verfahren nach Anspruch 1 bis 7, dadurch gekennzeichnet, daß bei einem Druck von 4-60 bar gearbeitet wird.

**Claims**

1. Process for the preparation of homopolymers and copolymers of 1-olefines in the gas phase in the absence of solvents or suspending agents using organometallic mixed catalysts based on transition metals of groups IVa, Va and/or VIa of the periodic system (Mendeleev), characterised in that the reaction temperature is above the softening point of the polymer and the polymer is obtained as a melt, the reaction being carried out under a pressure of up to 400 bar.

2. Process according to Claim 1, characterised in that the reaction temperature is 130-350 °C.

3. Process according to Claim 1, characterised in that the reaction temperature is 180-350 °C.

4. Process according to Claim 1, characterised in that the reaction temperature is 200-350 °C.

5. Process according to Claim 1, characterised in that the reaction temperature is 220-320 °C.

6. Process according to Claims 1 to 5, characterised in that ethylene is polymerised, if appropriate in the presence of comonomers.

7. Process according to Claim 6, characterised in that propylene, but-1-ene, 4-methylpent-1-ene, hex-1-ene or oct-1-ene, individually or as mixtures, are employed as the comonomers.

8. Process according to Claims 1 to 7, characterised in that the reaction is carried out under a pressure of 3-200 bar.

9. Process according to Claims 1 to 7, characterised in that the reaction is carried out under a pressure of 4-100 bar.

10. Process according to Claims 1 to 7, characterised in that the reaction is carried out under a pressure of 4-60 bar.

**Revendications**

1. Procédé de préparation d'homo- et co-polymères de 1-oléfines en l'absence de solvants ou milieux de suspension, en phase gazeuse, avec utilisation de catalyseurs mélangés organo-métalliques à base de métaux de transition des groupes IVa, Va et/ou VIa de la Classification Périodique (de Mendeleieff), caractérisé en ce que la température de réaction est supérieure à la température de ramollissement du polymère et en ce que le polymère est formé à l'état fondu, la pression opératoire pouvant aller jusqu'à 400 bars.

2. Procédé selon la revendication 1, caractérisé en ce que la température de réaction est de 130 à 350 °C.

3. Procédé selon la revendication 1, caractérisé en ce que la température de réaction est de 180 à 350 °C.

4. Procédé selon la revendication 1, caractérisé en ce que la température de réaction est de 200 à 350 °C.

5. Procédé selon la revendication 1, caractérisé en ce que la température de réaction est de 220 à 320 °C.

6. Procédé selon les revendications 1 à 5, caractérisé en ce que l'on polymérise de l'éthylène éventuellement en présence de comonomères.

7. Procédé selon la revendication 6, caractérisé en ce que l'on utilise en tant que comonomères le propylène, le butène-1, le 4-méthyl-pentène-1, l'hexène-1 ou l'octène-1 isolément ou en mélange entre eux.

8. Procédé selon les revendications 1 à 7, caractérisé en ce que l'on opère à une pression de 3 à 200 bars.

9. Procédé selon les revendications 1 à 7, caractérisé en ce que l'on opère à une pression de 4 à 100 bars.

10. Procédé selon les revendications 1 à 7, caractérisé en ce que l'on opère à une pression de 4 à 60 bars.